(19) Europäisches Patentamt
European Patent Office
Office européen des brevets

(11) Veröffentlichungsnummer : **0 258 724 B2**

# (12) NEUE EUROPÄISCHE PATENTSCHRIFT

(45) Veröffentlichungstag der neuen Patentschrift : **25.11.92 Patentblatt 92/48**

(51) Int. Cl.[5] : **C08F 8/44,** C08F 8/32, C03C 17/32

(21) Anmeldenummer : **87111888.1**

(22) Anmeldetag : **17.08.87**

## (54) Verwendung eines modifizierten Polyethylens zur Vergütung der äusseren Oberflächen von Glasbehältern.

Die Akte enthält technische Angaben, die nach dem Eingang der Anmeldung eingereicht wurden und die nicht in dieser Patentschrift enthalten sind.

(30) Priorität : **27.08.86 DE 3629147**

(43) Veröffentlichungstag der Anmeldung : **09.03.88 Patentblatt 88/10**

(45) Bekanntmachung des Hinweises auf die Patenterteilung : **06.12.89 Patentblatt 89/49**

(45) Bekanntmachung des Hinweises auf die Entscheidung über den Einspruch : **25.11.92 Patentblatt 92/48**

(84) Benannte Vertragsstaaten : **AT BE CH DE ES FR GB IT LI LU NL SE**

(56) Entgegenhaltungen :
**DE-A- 1 495 137**
**DE-B- 1 235 590**
**DE-B- 1 291 448**
**FR-A- 2 107 538**
**US-A- 3 507 787**
**Methoden der organischen Chemie (Houben-Weyl), Band XI/2, 4. Auflage, G. Thieme Verlag Stuttgart, 1958, S. 598-601**

(73) Patentinhaber : **Th. Goldschmidt AG**
**Goldschmidtstrasse 100 Postfach 101461**
**W-4300 Essen 1 (DE)**

(72) Erfinder : **Ruf, Erich, Dr.**
**Auf'm Gartenstück 10**
**W-4300 Essen (DE)**

EP 0 258 724 B2

## Beschreibung

Verwendung von modifiziertem Polyethylen zur Vergütung der äußeren Oberflächen von Glasbehältern

Die Erfindung betrifft die Verwendung von modifiziertem Polyethylen, welches seitenständig gebundene Gruppen, die von Säureamiden abgeleitet sind und endständig eine quaternäre Ammoniumgruppe aufweisen, trägt, zur Vergütung von Glasoberflächen, insbesondere der äußeren Oberfläche von Glasbehältern.

Die Erfindung betrifft insbesondere die Verwendung des modifizierten Polyethylens für die Nachvergütung von Glasoberflächen, welche eine dünne Oberflächenschicht von Metalloxiden, z.B. Zinnoxiden, aufweisen (sogenannte Heißendvergütung), mit wäßrigen Dispersionen des modifizierten Polyethylens (sogenannte Kaltendvergütung) zur Verbesserung der Glätte der Oberflächen und zur Erhöhung ihrer Kratzfestigkeit.

Die Festigkeit von Glas hängt von der Unversehrtheit der Glasoberfläche ab. Unmittelbar nach Herstellung des Glases ist seine Festigkeit am höchsten. Die Festigkeit sinkt jedoch, wenn die Glasoberfläche Kratzer oder Schrammen aufweist. Es sind deshalb zahlreiche Verfahren bekannt, die Oberfläche von Gegenständen aus Glas gegen mechanische Beschädigungen zu schützen.

So ist es bekannt, Glasgegenstände direkt nach ihrer Formgebung bei Temperaturen zwischen etwa 370 und 750°C mit anorganischen oder organischen Verbindungen des Titans, Zinns oder Zirkons, zu behandeln (sogenannte Heißendvergütung). Dabei entstehen auf der Oberfläche der heißvergüteten Glasgegenstände dünne, farblose, transparente Metalloxidüberzüge.

Zur weiteren Erhöhung der Ritzhärte, der Festigkeit und insbesondere der Glätte von Glasgegenständen ist es bekannt, auf die mit Metalloxiden vergüteten Glasgegenstände noch einen organischen Überzug aufzubringen.

Aus der umfangreichen Patentliteratur werden zum Stand der Technik folgende Patentschriften genannt:

In der DE-PS 12 91 448 ist ein Verfahren zur Erhöhung der Ritzhärte und Festigkeit von Glasgegenständen, insbesondere Glasflaschen, durch Erzeugung eines dünnen, farblosen, durchsichtigen Überzuges auf den Außenflächen der Glasgegenstände beschrieben, dessen Merkmal darin besteht, daß auf die Glasgegenstände aufgebrachte dünne Schichten eines pyrolysierbaren anorganischen Salzes oder einer pyrolysierbaren organischen Verbindung des Titans, Zirkoniums, Zinns oder Vanadiums auf den Glasgegenständen bei Temperaturen zwischen 370 und 705°C pyrolytisch zu den entsprechenden Metalloxiden zersetzt, die Glasgegenstände auf Temperaturen zwischen 230 und 65,5°C abgekühlt und auf die noch heißen Glasoberflächen ein Olefinpolymerisat, ein Polyurethan, ein Polystyrol oder ein Essigsäuresalz eines Alkylamins aufgesprüht werden. Beispiel eines Olefinpolymerisates ist ein Polyethylenwachs niedrigen Molekulargewichts, welches in Form einer wäßrigen Emulsion verwendet wird. Als Emulgator dient das Alkalimetallsalz einer Fettsäure, insbesondere Kaliumoleat. Die Dicke des Überzuges auf dem Glasgegenstand beträgt etwa 1 µm. Diese Filme aus Polyethylenwachs sind jedoch nicht waschlaugenbeständig und werden bei einer Reinigung des Behälters nach verhältnismäßig kurzer Zeit durch die waschaktiven Substanzen der heißen Reinigungsflotte abgelöst.

Aus der DE-PS 12 98 681 ist ein Verfahren zum Überziehen von Glasgegenständen mit einer verschleißfesten und gleitfähigen Schicht bekannt. Dieses Verfahren ist dadurch gekennzeichnet, daß auf die Oberfläche des Glasgegenstandes eine wäßrige lösung aus einem Umsetzungsprodukt von Polyvinylalkohol, einem emulgierten Polyolefin, vorzugsweise emulgierten Polyethylen, und einer sauren Verbindung aufgebracht wird.

Die DE-PS 15 96 742 betrifft ein Verfahren zur Herstellung dauerhafter, glatter Überzüge auf Glaskörpern, bei dem der Überzug auf die auf 70 bis 225°C erwärmten Glaskörper aus einer Mischung eines dispergierten Polyolefins und eines Polyoxyethylenderivates einer Fettsäure aufgebracht wird. Das disperse Polyolefin ist vorzugsweise Polyethylen. Als Polyoxyethylenderivat einer Fettsäure wird vorzugsweise Polyoxyethylenmonostearat verwendet.

Aus der DE-PS 24 32 478 ist ein Glasbehälter mit einem Überzug aus einem ionischen Copolymer zwischen einem $\alpha$-Olefin und einer $\alpha,\beta$-ethylenischen ungesättigten Carbonsäure bekannt, wobei der Glasbehälter zusätzlich einen Gleitüberzug mit in Gewichtsteilen folgenden Bestandteilen aufweist:

1 Teil mindestens eines der folgenden Salze: Calciumstearat, Zinkstearat, Calciumoleat, Zinkoleat;
0,5 bis 2 Teile eines löslichen Polyvinylalkohols und 1,7 bis 3,6 Teile mindestens eines der folgenden Oleate: Kaliumoleat, Natriumoleat und Ammoniumoleat.

Aus der DE-AS 12 35 590 ist ein Verfahren zur Herstellung von kationaktiven Wachsen bekannt, bei dem man oxidierte Polyethylenwachse mit aliphatischen Polyaminen mit mindestens zwei Aminogruppen, von denen mindestens eine primär oder sekundär sein muß, und bzw. oder tertiären, mindestens eine Hydroxylgruppe enthaltenden Aminen bei Temperaturen über 100°C in basische Amide und bzw. oder basische Ester überführt und gegebenenfalls die erhaltenen Produkte in Emulsionsform quaterniert. Die Verfahrensprodukte können zum Weichmachen von Textilien verwendet werden. Die Eignung derartiger Produkte zur Vergütung von Glasoberflächen ist in der DE-AS 12 35 590 weder beschrieben noch nahegelegt worden.

Diese aus dem Stand der Technik bekannten Beschichtungsmaterialien sind jedoch noch nicht in der Lage, alle Anforderungen zu erfüllen, die an ein Überzugsmittel für Glasoberflächen zu stellen sind. Diese Überzüge müssen insbesondere folgende Forderungen erfüllen:

Die Überzüge sollen die Glasoberfläche wirksam vor mechanischen Beschädigungen schützen, wie sie beispielsweise auftreten, wenn die Glasbehälter bei der Reinigung, Abfüllung oder Verpackung aneinanderreiben oder mit Metallflächen der Reinigungs-, Abfüll- oder Verpakkungsmaschinen in reibende Berührung kommen.

Die Überzüge müssen eine größere Anzahl von Reinigungs- und Waschvorgängen, z.B. in Spülmaschinen, überstehen. Die Überzüge müssen also insbesondere gegen den Angriff alkalischer Waschflotten beständig sein.

Die Überzüge müssen einen guten Gleitwert aufweisen, damit die behandelten Glasbehälter gut handhabbar sind.

Die Überzüge sollen auf den Glasoberflächen möglichst gut haften, damit sie bei punktueller Beschädigung nicht ohne weiteres von der Glasoberfläche abgezogen werden können.

Etiketten, insbesondere Etiketten mit selbstklebender Beschichtung, müssen auf den Überzügen der Beschichtung ausreichend fest haften, damit die Etikettierfähigkeit der behandelten Glasbehälter gewährleistet bleibt.

Die Überzüge müssen physiologisch unbedenklich sein, da die Mehrzahl von derartige Überzüge aufweisenden Glasbehältern zur Verpackung von Lebensmitteln oder Getränken dient.

Schließlich sollen die Überzüge den Endpreis der behandelten Glaswaren nicht wesentlich erhöhen.

Der Erfindung liegt die Aufgabe zugrunde, ein Überzugsmittel zu finden, welches die vorstehend genannten Anforderungen möglichst optimal erfüllt. Dabei soll das Überzugsmittel vorzugsweise in Form einer wäßrigen Dispersion auf die Glasoberfläche aufgebracht werden können. Vorzugsweise soll das Überzugsmittel auf Glasbehälter aufgebracht werden, welche zuvor mit metallorganischen Verbindungen unter Ausbildung einer Metalloxidschicht heißvergütet worden sind und noch eine Temperatur von etwa 50 bis 150°C aufweisen.

Überraschend wurde nun gefunden, daß ein in bestimmter Weise modifiziertes Polyethylen Überzüge des gewünschten Eigenschaftsprofiles herzustellen gestattet.

Gegenstand der Erfindung ist deshalb die Verwendung von modifiziertem Polyethylen mit einem mittleren Molekulargewicht von 500 bis 10 000 mit einer oder mehreren seitenständig gebundenen Gruppe(n) der Formel

$$-CONH(CH_2)_n\overset{R^1}{\underset{R^2}{N}}{}^{\oplus}-R^3 \ . \ X^{\ominus} \qquad I$$

wobei $R^1$ und $R^2$ gleich oder verschieden sind und eine niedere Alkylgruppe mit 1 bis 4 Kohlenstoffatomen bedeuten, $R^3$ eine Alkyloder Arylgruppe, X ein Halogen- oder Sulfatrest und n = 2 oder 3 ist.

Vorzugsweise weist das modifizierte Polyethylen ein mittleres Molekulargewicht von 1000 bis 5000 auf. Das durchschnittliche polymere Molekül soll dabei 1 bis 10, vorzugsweise 1 bis 5 seitenständig gebundene Gruppen der Formel I aufweisen.

Die Reste $R^1$ und $R^2$ können gleich oder verschieden sein. Sie sind aber vorzugsweise gleich. Sie können eine Methyl-, Ethyl-, Propyl-, Isopropyl-, Butyl- oder Isobutylgruppe bedeuten. Vorzugsweise haben $R^1$ und $R^2$ jeweils die Bedeutung einer Methylgruppe.

$R^3$ ist eine Alkyl- oder Arylgruppe. Die Alkylgruppe kann 1 bis 20 Kohlenstoffatome aufweisen. Sie ist vorzugsweise geradkettig. Die Alkylgruppe kann substituiert sein. Ein bevorzugtes Beispiel einer substituierten Alkylgruppe ist die Benzylgruppe. Als Arylgruppe ist die Phenylgruppe bevorzugt.

X ist ein Halogen- oder Sulfation. Bevorzugt ist X ein Chlorion.

Der Index n ist 2 oder 3, jedoch vorzugsweise = 3.

Das Polyethylen weist vorzugsweise 1 bis 10 seitenständig gebundene Gruppen der Formel I auf.

Das erfindungsgemäß zu verwendende modifizierte Polyethylen ergibt auf Glasoberflächen glatte Überzüge mit hervorragenden Gleitwerten. Die Überzüge haften ausgezeichnet auf Glasoberflächen und sind deshalb besonders zur Nachvergütung von Altflaschen (Mehrwegflaschen) geeignet.

Die Überzüge sind gegen mehrfache Einwirkung wäßriger heißer Waschflotten stabil und behalten insbesondere ihre Glätte.

Die mit den Überzügen versehenen Glasbehälter können in üblicher Weise etikettiert werden.

Die besondere Glättewirkung des erfindungsgemäß zu verwendenden Polyethylens zeigt sich auch darin, daß Glasbehälter mit einer vorhandenen Heißendvergütung nach Eintauchen in auf Raumtemperatur befindliche Polyethylendispersionen bzw. nach Aufsprühen solcher Dispersionen auf Glasbehälter, auch in nassem Zustand bzw. bei Einwirkung von Kondenswasser auf die beschichteten Glasoberflächen, noch eine gute Glättewirkung aufweisen, was bei anderen Kaltendvergütungsmitteln auf Basis nichtmodifizierten Polyethylens erst nach Antrocknen solcher Schichten der Fall ist.

Das erfindungsgemäß zu verwendende modifizierte Polyethylen wird zur Bildung des Überzuges in der Regel in Form einer wäßrigen Dispersion auf die Glasoberfläche aufgebracht und auf dieser getrocknet. Das Aufbringen der Polyethylendispersion erfolgt meist im Anschluß an eine Heißendvergütung unter Ausnutzung der Restwärme der zu vergütenden Glasbehälter bei einer Glastemperatur von 50 bis 150°C. Die Dispersion wird dabei auf die Oberfläche gesprüht. Es ist auch möglich, die Glasbehälter in die Dispersion einzutauchen.

Zur Herstellung geeigneter Dispersionen aus dem modifizierten Polyethylen kann man die aus dem Stand der Technik bekannten Dispergierhilfsmittel verwenden. Geeignete Dispergierhilfsmittel sind wasserlösliche Anlagerungsprodukte von Ethylenoxid an Fettalkohole oder Alkylphenole.

Als besonders brauchbar haben sich als Dispergierhilfsmittel jedoch solche grenzflächenaktiven Verbindungen erwiesen, welche als hydrophile Gruppen Betain- oder Aminoxidgruppen und als hydrophobe Gruppen langkettige Alkylreste aufweisen.

Beispiel eines solchen geeigneten Betains ist eine Verbindung der allgemeinen Formel

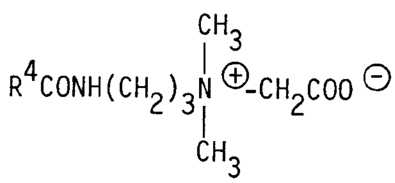

II

wobei $R^4$ ein langkettiger, von einer Fettsäure abgeleiteter Alkylrest mit im Mittel 7 bis 17 Kohlenstoffatomen ist.

In ähnlicher Weise eignet sich als Dispergierhilfsmittel ein Aminoxid der folgenden allgemeinen Formel

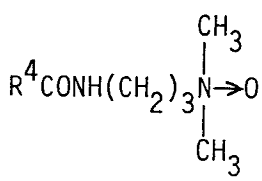

III

$R^4$ ist dabei wie oben definiert.

Derartige Betaine und Aminoxide sind aus dem Stand der Technik bekannt.

Zur Herstellung der Dispersionen wird das modifizierte Polyethylen aufgeschmolzen, das Dispergierhilfsmittel oder das Dispergierhilfsmittelgemisch wird zweckmäßig in der wäßrigen Phase gelöst oder gleichmäßig verteilt. Die Schmelze des modifizierten Polyethylens wird unter intensivem Rühren in das auf 60 bis 95°C erwärmte Wasser gegeben. Es empfiehlt sich, die erhaltene Dispersion langsam unter Rühren abzukühlen, wobei zweckmäßig eine Abkühlungsgeschwindigkeit von etwa 1 bis 3°C/Min. eingehalten werden sollte.

Die unter Verwendung der Betaine der Formel II bzw. der Aminoxide der Formel III hergestellten Dispersionen sind gegenüber den Härtebildnern des Wassers unempfindlich.

Für die Vergütung von Glasoberflächen kann die Dispersion direkt oder gegebenenfalls nach Verdünnen auf 0,1 Gew.-% Polyethylen verwendet werden.

In dem folgenden Beispiel wird die Herstellung des modifizierten Polyethylens, die Zubereitung einer wäßrigen Dispersion dieses modifizierten Polyethylens und die erfindungsgemäße Verwendung dieser Dispersion für die Kaltendvergütung gezeigt.

Herstellung eines quaternäre Ammoniumgruppen aufweisenden Polyethylens und einer wäßrigen Dispersion hiervon (nicht erfindungsgemäß):

In einem 2-1-Vierhalskolben mit Rührer, Thermometer, Destillationsbrücke, Vorlage und Tropftrichter werden 800 g eines Polyethylenwachses mit einer Verseifungszahl von ca. 40 bis 60 aufgeschmolzen und bei einer Temperatur von 120°C über einen Tropftrichter mit 100 g Dimethylaminopropylamin zügig unter Rühren versetzt.

Im Anschluß daran wird die Reaktionsmischung unter Rühren ca. 4 bis 5 Stunden auf ca. 170°C erhitzt.

Anschließend werden unter Wasserstrahlvakuum unter weiterem Rühren (Produkttemperatur ca. 170°C) aus der Umsetzung erhaltenes Reaktionswasser bzw. Alkohol und überschüssiges Amin abdestilliert. Es werden ca. 874 g amidopropyldimethylaminogruppenhaltiges Polyethylen erhalten.

120 g des amidopropyldimethylaminogruppenhaltigen Polyethylens werden auf ca. 150 bis 160°C aufgeschmolzen und dann in noch flüssiger Form bei dieser Temperatur mit 20 g Benzylchlorid in einem Vierhalskolben, versehen mit Rührer, Tropftrichter, Thermometer, Destillationsbrücke und Vorlage, unter Rühren versetzt. Die Reaktionsmischung wird 1 Stunde bei dieser Temperatur gerührt. Im Anschluß daran wird überschüssiges Benzylchlorid im Vakuum (2 mbar) abdestilliert. Es werden 131 g quaternäre Ammoniumgruppen enthaltendes Polyethylen erhalten.

78,5 g des noch flüssigen, quaternäre Ammoniumgruppen enthaltenden Polyethylens werden über einen beheizbaren Tropftrichter in eine 95 bis 98°C heiße Mischung eingerührt, die sich in einem Emulgiergefäß (1-l-Glaskolben, versehen mit Rührer, Thermometer, Rückflußkühler und beheizbarem Tropftrichter) befindet und 361,2 g Wasser und 60,0 g einer 30 %igen wäßrigen lösung von Kokosfettsäureamidopropyldimethylaminoxid enthält. Die so erhaltene Dispersion wird noch ca. 30 Minuten bei 98°C gerührt und anschließend unter Rühren auf Raumtemperatur abgekühlt und für den folgenden Vergleichsversuch verwendet.

Zur Durchführung der Vergleichsversuche werden nasse, auf Raumtemperatur befindliche Bierflaschen, die eine Heißendvergütung von 50 ctu (coating thickness unit) aufweisen, eingesetzt.

Als Vergleich dient eine Polyethylendispersion des Standes der Technik:

Anoxidiertes Polyethylen mit einer Verseifungszahl von 40 bis 50 wird mit einem nichtionogenen Emulgator aufgeschmolzen und mit heißem Wasser dispergiert. Die Dispersion enthält 24 % Festkörper.

Die erfindungsgemäß zu verwendende Dispersion und die Vergleichsdispersion werden für die Anwendung mit deionisiertem Wasser im Verhältnis 1 : 50 verdünnt. In diese Dispersion werden die auf Raumtemperatur befindlichen Bierflaschen voll eingetaucht und sofort wieder herausgezogen. Danach werden

a) ohne weitere Nachbehandlung und

b) nach Abspülen mit Wasser jeweils Scratch-Testwerte mit Hilfe eines Scratch Resistance Testers bestimmt. Es werden folgende Werte gemessen:

Dispersion mit unmodifiziertem Polyethylen:

a) ohne Nachbehandlung: 1 bis 2 kg

b) nach Abspülen mit Wasser: 1 kg

Dispersion mit erfindungsgemäß modifiziertem Polyethylen:

a) ohne Nachbehandlung: > 25 kg

b) nach Abspülen mit Wasser: 20 kg

Diese praxisnah durchgeführten Versuche zeigen, daß das erfindungsgemäß zu verwendende modifizierte Polyethylen eine Naßvergütung von Glasflaschen ermöglicht und die vergütete Glasoberfläche 25fach höhere Belastung ohne Ausbildung von Kratzern oder anderen Oberflächendefekten aushält.

## Patentansprüche

1. Verwendung von modifiziertem Polyethylen eines mittleren Molekulargewichtes von 500 bis 10 000 mit einer oder mehreren seitenständig gebundenen Gruppe(n) der Formel

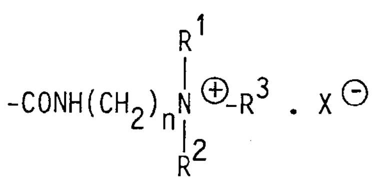

wobei $R^1$ und $R^2$ gleich oder verschieden sind und eine niedere Alkylgruppe mit 1 bis 4 Kohlenstoffatomen bedeuten, $R^3$ eine Alkyl- oder Arylgruppe, X ein Halogen- oder Sulfatrest und n = 2 oder 3 ist, in Form einer wäßrigen Dispersion, zur Vergütung der äußeren Oberflächen von Glasbehältern.

## Claims

1. Use of modified polyethylene of an average molecular weight from 500 to 10,000 having one or more side-group(s), of the formula

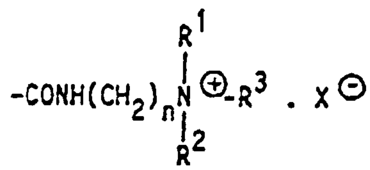

in which $R^1$ and $R^2$ are identical or different and denote a lower alkyl group having 1 to 4 carbon atoms, $R^3$ is an alkyl group or aryl group, X is a halogen radical or sulphate radical and n is = 2 or 3, in the form of an aqueous dispersion for coating the external surfaces of glass vessels.

## Revendications

1. Utilisation pour le revêtement de la surface extérieure de récipients en verre de polyéthylène modifié ayant une masse moléculaire moyenne de 500 à 10 000, avec un ou plusieurs groupes à liaison latérale, de formule

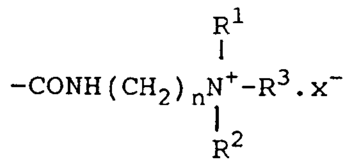

où $R^1$ et $R^2$ sont identiques ou différents, et représentent chacun un groupe alkyle inférieur ayant de 1 à 4 atomes de carbone, $R^3$ est un groupe alkyle ou aryle, X est un radical halogéno ou sulfate, et n = 2 ou 3, sous forme de dispersion aqueuse.